# EUROPEAN PATENT APPLICATION

(11) **EP 0 553 705 A1**
(43) Date of publication of application: **04.08.1993**
(21) Application number: 93100843.7
(22) Date of filing: 21.01.1993
(51) Int. Cl.: C09B 67/24, C09B 69/04, C09B 67/54, D06P 1/66

(54) **Anionic dye composition**

(30) Priority: 28.01.1992 JP 35837/92
(71) Applicant: NIPPON KAYAKU KABUSHIKI KAISHA, Tokyo 102 (JP)
(72) Inventor: Ojima, Masayoshi, Yono-shi, Saitama-ken (JP); Sugimoto, Tadaaki, Kawaguchi-shi, Saitama-ken (JP); Akatani, Yoshiki, Tokyo (JP); Kubo, Motoyoshi, Konosu-shi, Saitama-ken (JP)
(74) Representative: Türk, Gille, Hrabal, Leifert

(57) **Abstract**

To produce a dye composition comprising an anionic dye sequestered with a specified quaternary ammonium compound and an anionic surfactant and to dye polyamide fibers, cellulose fibers and fibrous materials comprising them with the dye composition.

The dyeing properties of anionic dyes which have been a problem in the art can be remarkably improved and excellent levelness and penetrability can be obtained by sequestering an anionic dye such as an acid dye, reactive dye or direct dye and dispersing it with an anionic surfactant.

## Description

The present invention relates to an anionic dye composition and a process for dyeing therewith.

In particular, the present invention relates to a dye composition comprising a salt formed from an anionic dye having at least one sulfonic acid group in its molecular structure and a specified quaternary ammonium compound and an anionic surfactant, and a process for dyeing fibrous materials with the dye composition.

Polyamide fibers, such as nylon, silk and wool, and cellulose fibers, such as cotton, rayon, cuprammonium rayon and hemp, are usually dyed with a water-soluble anionic dye having at least one sulfonic acid group in its molecular structure. The anionic dyes are broadly classified into those having a relatively low molecular weight and a high affinity for the polyamide fibers and those having a relatively high molecular weight and a high affinity for the cellulose fibers. The former dyes include acid dyes and acid mordant dyes, while the latter dyes include reactive dyes and direct dyes, and these dyes are selected depending on the kind of the fibers to be dyed and the use thereof.

In the field of dyeing yarns, a high wetfastness is required of the dye to be used, because a heat treatment such as heat setting is involved in the step of knitting or weaving the dyed yarns. However, level dyeing with a highly wetfast dye is difficult, because such a dye usually has low migration characteristics. On the other hand, in the field of dyeing cloths, not only the fastness but also the level dyeing properties are so important that the dye to be used is selected in due consideration of the affinity for the cloth, dyeing properties and migration characteristics.

Thus the wetfastness is incompatible with the level dyeing properties, and no dye or process capable of satisfying both of the wetfastness and level dyeing properties has been found. In addition, fibrous materials recently have become diversified and the level dyeing of some of them is very difficult. In order to dye such a material, it is necessary to use a dye having high level dyeing properties even in the above-described field of dyeing yarns. In dyeing a material having a large surface area such as ultrafine yarns, the dye must be used in an increased amount, because otherwise a full apparent depth shade of the dyed yarns is difficult to obtain. As a result, the wetfastness of the dyed yarns is so seriously reduced that the dye to be used must have a high wetfastness. Thus in dyeing such a material, a dye having both high wetfastness and level dyeing properties is necessitated. Further, in combination dyeing, the dyeing behavior of the dyes to be used is important for the level dyeing and reproducibility. It is thus necessary to use dyes having an equal affinity for fibers. However, it is very difficult at present to select dyes having also a satisfactory wetfastness.

After intensive investigations made for the purpose of solving the above-described problem, the inventors have found that when a specified dye composition is used for dyeing natural and synthetic polyamide fibers, cellulose fibers and fibrous materials containing them, the levelness and penetrability can be remarkably improved and that when a combination of dyes is used, the dyeing properties of the dyes used accord with each other and very excellent levelness and penetrability can be achieved. The present invention has been completed on the basis of these findings.

Namely, the present invention provides an anionic dye composition comprising an anionic dye sequestered with a quaternary ammonium compound of the formula (1): 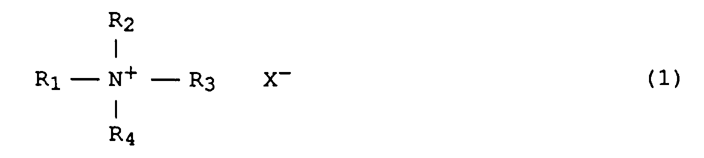
wherein R₁, R₂, R₃ and R₄ independently from each other represent an alkyl, benzyl, vinyl, hydroxyalkyl or aryloxyalkyl group (each alkyl having 1 to 18 carbon atoms) and X represents an anionic residue,
and an anionic surfactant, and a process for dyeing natural and synthetic polyamide fibers, cellulose fibers and fibrous materials containing them by using the dye composition.

A detailed description will now be made on the present invention.

Examples of the quaternary ammonium compounds of the above formula (1) to be used in the present invention include triethylbenzylammonium chloride, dimethylethylbenzylammonium chloride, methyldiethylbenzylammonium chloride, ethyldiproylbensylammonium chloride, diethyldibenzylammonium chloride, octylbenzyldimethylammonium chloride, stearylbenzyldimethylammonium chloride, stearyltrimethylammonium chloride, laurylbenzyldimethylammonium chloride, vinyldimethylbenzylammonium chloride, trimethylbenzylammonium chloride, trihydroxyethylmethylammonium chloride, trimethylhydroxyethylammonium chloride, decyltrimethylammonium chloride, dilauryldimethylammonium chloride, lauryltrimethylammonium chloride, dodecyldimethyl-β-phenoxyethylammonium chloride, and dimethylbenzyldodecylammonium chloride; corresponding bromides, iodides, hydroxides, sulfates, perchlorates, phosphates, acetates, methylsulfates and ethylsulfates; and mixtures of them.

Among the above-mentioned quaternary ammonium compounds of formula (1), the compounds wherein one or more of R₁, R₂, R₃ and R₄ is benzyl or alkyl having 8 to 16 carbon atoms and X is chloride, bromide or hydrogen sulfate are preferable.

Among the above-mentioned quaternary ammonium compounds, decyltrimethylammonium chloride and lauryltrimethylammonium chloride are more preferable.

The anionic dye to be used for forming the dye composition of the present invention may have any structure so far as it has at least one sulfonic acid group in the molecule. Examples thereof include acid dyes described in Colour Index, Third Edition, Vol. 1 (1971), pp. 1001 to 1562, Vol. 6 (Revised Edition, 1975), pp. 6001 to 6070, Vol. 7 (Second Revised Edition, 1982), pp. 7001 to 7046 and Vol. 8 (Third Revised Edition, 1987), pp. 8001 to 8042; reactive dyes described in Colour Index, Third Edition, Vol. 3 (1971), pp. 3391 to 3560, Vol. 6 (Revised Edition, 1975), pp. 6268 to 6345, Vol. 7 (Second Revised Edition, 1982), pp. 7185 to 7231 and Vol. 8 (Third Revised Edition, 1987), pp. 8147 to 8206; and direct dyes described in Colour Index, Third Edition, Vol. 2 (1971), pp. 2005 to 2478, Vol. 6 (Revised Edition, 1975), pp. 6103 to 6127, Vol. 7 (Second Revised Edition, 1982), pp. 7063 to 7087 and Vol. 8 (Third Revised Edition, 1987), pp. 8059 to 8081.

Among the above-mentioned dyes, acid dyes are preferable.

More preferable acid dye is a monoazo dye, a diazo dye, a phthalocyanine dye, a rhodamine dye or a triphenylmethane dye having 1 to 4 sulfonic acid groups.

Examples of the anionic surfactants to be used for forming the dye composition of the present invention include higher alcohol sulfates, higher fatty acid sulfates, alkylbenzenesulfonic acids, higher alcohol phosphates and styrene/maleic acid copolymers. Particularly preferred anionic surfactants include formalin condensates of naphthalenesulfonic acid and alkylbenzenesulfonic acid, ligninsulfonic acid, formalin condensates of cresolsulfonic acid, formalin condensates of cresol and 2-naphthol-6-sulfonic acid, formalin condensates of naphthalenesulfonic acid, formalin condensates of alkylnaphthalenesulfonic acid and formalin condensates of creosote oil sulfonic acids.

The dye composition of the present invention is preferably prepared by slowly adding a solution of a quaternary ammonium compound in an alcohol such as ethanol, isopropyl alcohol or propyl alcohol usually in a concentration of 10 to 80% by weight to an aqueous or warm aqueous solution of one of the above-described anionic dyes under stirring to precipitate a sequestered anionic dye, filtering the precipitated crystals, thoroughly washing the crystals with water, and adding an aqueous solution of the above-described anionic surfactant or, alternatively, adding the crystals of the sequestered anionic dye to an aqueous solution of the anionic surfactant. The dye composition can be used in the liquid form or, alternatively, it can be dried and divided into powder particles or granules. It is also possible to neutralize the solution containing the crystals formed by sequestering the anionic dye with an acid without filtration and adding an aqueous solution of an anionic surfactant to the solution.

In order to divide the dye composition of the present invention into fine particles, the sequestered anionic dye crystals are mixed with an anionic surfactant, if necessary, by heating or treating with a sand grinder.

The amount of the quaternary ammonium compound used for forming the dye composition of the present invention is usually 0.5 to 2 molar equivalents, preferably 0.75 to 1.2 molar equivalents, per molar equivalent of the sulfonic acid group in the anionic dye. The amount of the anionic surfactant used is usually 50 to 500% by weight based on the sequestered anionic dye. The quaternary ammonium compound is desirably used in the form of a 10 to 80%, preferably 20 to 50% (by weight) solution in the above-described alcohol.

The dye composition of the present invention may contain, if desired, ordinary additives such as a neutral salt, e.g. sodium sulfate or sodium chloride, urea, pH regulator, water softener and mildew-proofing agent, in addition to the above-described sequestered anionic dye salt such as the sequestered acid dye, reactive dye or direct dye and anionic surfactant.

The description will be made on the dyeing of the fibrous material with the dye composition of the present invention.

The fibrous materials dyeable by the dyeing process of the present invention include polyamide fibers such as nylon, silk and wool (for example, shrinkproof-finished wool); cellulose fibers such as cotton, rayon, cuprammonium rayon and hemp; and conjugated fibers comprising them.

In the dip dyeing process, dyeing is usually conducted, if necessary, in the presence of an acid, alkali or neutral salt such as sodium sulfate or sodium chloride at 40 to 135°C for 10 to 90 min.

In the printing process, dyeing is usually conducted by using sodium alginate or an emulsion paste as a stock paste, adding the dye composition of the present invention, urea and, if necessary, an acid or alkali to the paste to form a color paste, printing a fiber with the color paste, and subjecting the fiber, if necessary, to an intermediate drying and them to steaming or dry heat treatment.

In the pad dyeing process, dyeing is conducted by padding a fiber with a padding solution comprising the dye composition of the present invention, urea, a migration inhibitor, a penetrant and, if necessary, an acid or alkali, and subjecting the fiber to an intermediate drying and then to steaming or dry heat treatment.

The following Examples will further illustrate the present invention, which by no means limit the invention. In the Examples, parts and percentages are given by weight and weight%.

### Example 1

10 parts of a yellow acid dye of the following formula (2) was dissolved in 150 parts of water. 27 parts of a 27% solution of lauryltrimethylammonium chloride in isopropyl alcohol was added dropwise to the resultant solution under stirring at 60°C to form crystals, which were separated by filtration, thoroughly washed with water, and dried. 40 parts of an aqueous solution containing 6 parts of the sequestered acid dye thus obtained and 18 parts of Demol N (sodium salt of formalin condensate of β-naphthalenesulfonic acid mfd. by Kao Corporation) was mixed in a triturator to obtain a dispersion, which was dried to obtain the dye composition of the present invention.

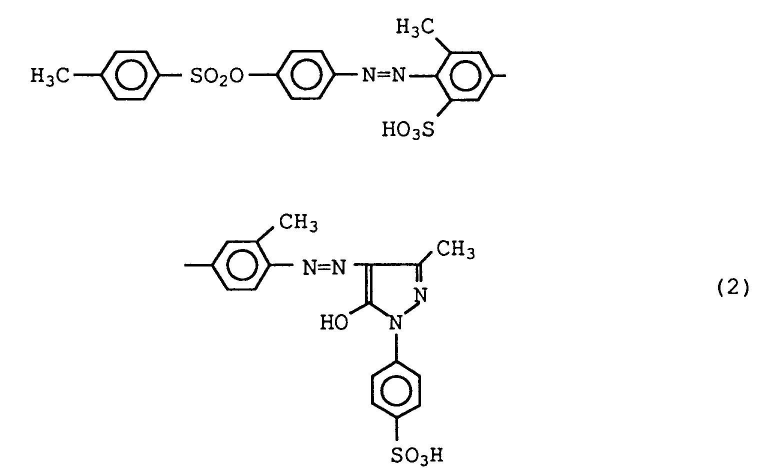

### Example 2

10 parts of a red acid dye of the following formula (3) was dissolved in 200 parts of water. 25 parts of a 27% solution of lauryltrimethylammonium chloride in isopropyl alcohol was added dropwise to the resultant solution under stirring at 60°C to form crystals, which were separated by filtration, thoroughly washed with water, and dried. Then the same procedure as that of Example 1 was repeated to obtain the dye composition of the present invention.

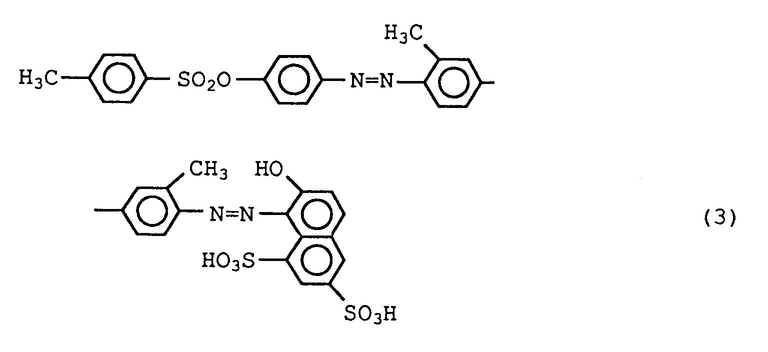

### Example 3

15 parts of a blue acid dye of the following formula (4) was dissolved in 300 parts of water. 18 parts of a 27% solution of lauryltrimethylammonium chloride in isopropyl alcohol was added dropwise to the resultant solution under stirring at 60°C to form crystals, which were separated by filtration, thoroughly washed with water, and dried. Then the same procedure as that of Example 1 was repeated to obtain the dye composition of the present invention.

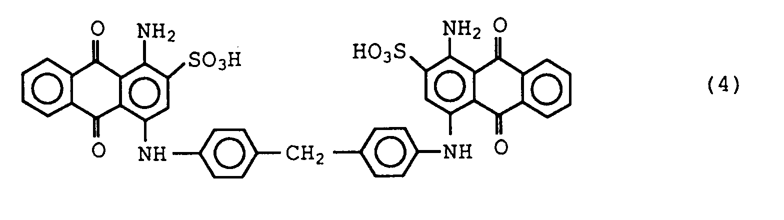

### Example 4

33 parts of a shrinkproof-finished wool cloth (chlorination hercosett wool) was put in 1,000 parts in total of a dye bath containing 0.6 part of the acid dye composition obtained in Example 1 and 1.5 parts of ammonium acetate and the temperature was elevated to 98°C during 45 min. After the cloth was dyed at that temperature for 30 min, it was slowly cooled to 60°C, washed with water and dried. The dyed cloth was excellent in levelness and penetrability and free from skitteriness. As compared with a nonsequestered acid dye of the above formula (2) tested in the same manner as that described above, it was found that the dye composition of the present invention had a lower dyeability at a temperature below around 70°C. The dye compositions of the present invention obtained in Examples 2 and 3 were also subjected to the same test as that described above to obtain similar results.

### Example 5

33 parts of a shrinkproof-finished wool cloth (chlorination hercoset wool) was put in 1,000 parts in total of a dye bath containing 0.1 part of each of the acid dye compositions obtained in Examples 1 to 3 (in total: 0.3 part) and 1.5 parts of ammonium acetate and the temperature was elevated to 98°C during 45 min. After the cloth was dyed at that temperature for 30 min, it was slowly cooled to 60°C, washed with water and dried. The dyed cloth was excellent in levelness and penetrability and free from skitteriness. As compared with the results of the dyeing conducted in the same manner as that described above except that combination dyeing was conducted with nonsequestered dyes of the above formulae (2), (3) and (4), it was found that the levelness and penetrability of the cloth dyed with the dye composition of the present invention were very excellent and that the dye compositions obtained in Examples 1 to 3 in the present invention had an equal dyeing speed.

### Example 6

33 parts of a nylon jersey cloth was put in 1,000 parts in total of a dye bath containing 0.1 part of each of the acid dye compositions obtained in Examples 1 to 3 (in total: 0.3 part) and 1.5 parts of ammonium acetate and the temperature was elevated to 98°C during 45 min. After the cloth was dyed at that temperature for 30 min, it was slowly cooled to 60°C, washed with water and dried. The dyed cloth was excellent in levelness and penetrability. As compared with the results of the dyeing conducted in the same manner as that described above except that combination dyeing was conducted with nonsequestered dyes of the above formulae (2), (3) and (4), it was found that the levelness and penetrability of the cloth dyed with the dye composition of the present invention were very excellent and that the dye compositions obtained in Examples 1 to 3 in the present invention had an equal dyeing speed.

### Example 7

33 parts of a cloth of nylon/wool (weight ratio: 50/50) blended fiber was put in 1,000 parts in total of a dye bath containing 0.1 parts of each of the acid dye compositions obtained in Examples 1 to 3 (in total: 0.3 part) and 1.5 parts of ammonium acetate and the temperature was elevated to 98°C during 45 min. After the cloth was dyed at that temperature for 30 min, it was slowly cooled to 60°C, washed with water and dried. The dyed cloth was excellent in levelness and penetrability. As compared with the results of the dyeing conducted in the same manner as that described above except that combination dyeing was conducted with nonsequestered dyes of the above formulae (2), (3) and (4), it was found that the nylon and wool dyed with the dye composition of the present invention had the same color.

### Example 8

A padding solution (1,000 parts) was prepared by mixing 10 parts of each of the acid dye compositions obtained in Examples 1 to 3 (in total: 30 parts), 30 parts of Levalin EX-BNS (a dye solubilizer mfd. by Bayer), 2.4 parts of Lameprint A-3 (a locust bean gum mfd. by Gruenau), 2 parts of Nagnanol L-100 (a phosphoric acid compound mfd. by Nagai Nouyaku-sho) and the balance of water. A cloth of nylon taffeta was padded with the padding solution, steamed at a high temperature of 150°C under atmospheric pressure for 3 min, thoroughly washed with hot water, soaped at 60°C for 5 min, washed with water, and dried. The cloth thus dyed had a uniform tailing and good levelness.

### Example 9

10 parts of a reactive dye of the following formula (5) was dissolved in 200 parts of water. 18 parts of a 40% solution of trimethyldecylammonium chloride in isopropyl alcohol was added dropwise to the resultant solution under stirring at 50°C to form crystals, which were separated by filtration, thoroughly washed with water, and dried. The washing with water in this step was repeated until the pH reached around 7. 8 parts of the sequestered reactive dye, 25 parts of Demol N (anionic surfactant described above) and 20 parts of water were mixed together in a triturator to obtain a dispersion, which was dried to obtain the dye composition of the present invention.

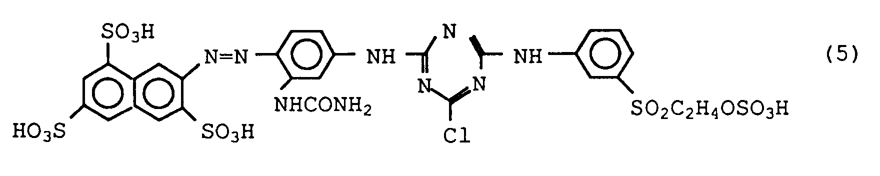

### Example 10

10 parts of a red reactive dye of the following formula (6) was dissolved in 150 parts of water. 24 parts of a 40% solution of trimethyldecylammonium chloride in isopropyl alcohol was added dropwise to the resultant solution under stirring at 60°C to form crystals, which were separated by filtration, thoroughly washed with water, and dried. Then the same procedure as that of Example 9 was repeated to obtain the dye composition of the present invention.

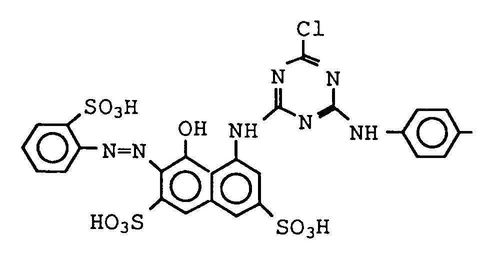

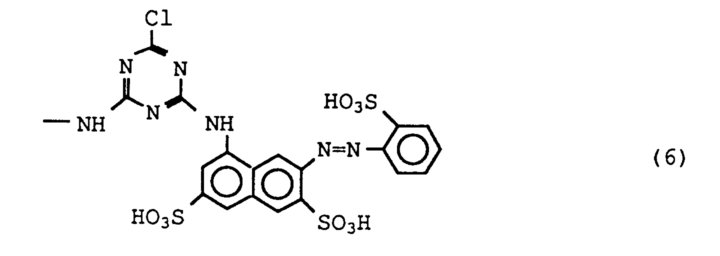

### Example 11

10 parts of a blue reactive dye of the following formula (7) was dissolved in 150 parts of water. 21 parts of a 27% solution of trimethyldecylammonium chloride in isopropyl alcohol was added dropwise to the resultant solution under stirring at 60°C to form crystals, which were separated by filtration, thoroughly washed with water, and dried. The washing with water in this step was repeated until the pH reached around 7. 8 parts of the sequestered reactive dye, 25 parts of Demol N (anionic surfactant described above) and 20 parts of water were mixed together and dispersed in a triturator to obtain the dye composition of the present invention.

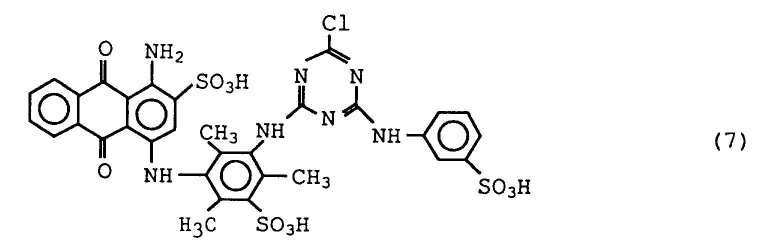

### Example 12

50 parts of a nonmercerized cotton knit was put in 980 parts in total of a dye bath containing 0.75 part of the reactive dye composition obtained in Example 9 and 30 parts of anhydrous sodium sulfate. After dyeing the knit at 60°C for 30 min, 20 parts of soda ash was added to the bath and dyeing was continued for additional 60 min. After the completion of the dyeing, the knit was thoroughly washed with water and dried. The dyed cloth was excellent in levelness and penetrability.

### Example 13

50 parts of a nonmercerized cotton knit was put in 980 parts in total of a dye bath containing 0.75 part of the reactive dye composition obtained in Example 10 and 40 parts of anhydrous sodium sulfate. After dyeing the knit at 80°C for 30 min, 20 parts of soda ash was added to the bath and dyeing was continued for additional 60 min. After the completion of the dyeing, the knit was thoroughly washed with water and dried. The dyed cloth was excellent in levelness and penetrability.

### Example 14

A color paste (100 parts) was prepared by mixing 3 parts of the reactive dye composition obtained in Example 11, 10 parts of urea, 3 parts of Snow Aligin M (sodium alginate mfd. by Fuji Kagaku Kogyo K.K.), 0.5 part of sodium hydrogencarbonate, 0.5 part of Polymine L New (an anti-reducing agent mfd. by Nippon Kayaku K.K.) and the balance of warm water, and applied to a mercerized cotton broadcloth. After intermediate drying followed by steaming at 100°C under atmospheric pressure for 5 min, the broadcloth was thoroughly washed with water and then with hot water, soaped at 98°C for 10 min, washed with water, and dried. The staining on the backgrounds of the dyed broadcloth was only slight.

### Example 15

10 parts of the red direct dye of the following formula (8) was dissolved in 150 parts of water. 33 parts of a 27% solution of lauryltrimethylammonium chloride in isopropyl alcohol was added dropwise to the resultant solution under stirring at 60°C to form crystals, which were separated by filtration, thoroughly washed with water, and dried. The washing with water in this step was repeated until the pH reached around 7. 6 parts of the sequestered direct dye, 20 parts of Demol C (sodium salt of a specific aromatic sulfonic acid/formalin condensate mfd. by Kao Corporation) and 20 parts of water were mixed together in a triturator to obtain a dispersion, which was dried to obtain the dye composition of the present invention.

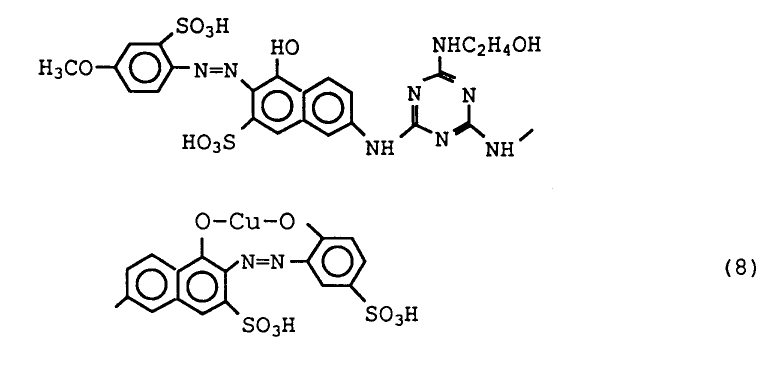

### Example 16

10 parts of a blue direct dye of the following formula (9) was dissolved in 150 parts of water. 34 parts of a 27% solution of lauryltrimethylammonium chloride in isopropyl alcohol was added dropwise to the resultant solution under stirring at 50°C to form crystals, which were separated by filtration, thoroughly washed with water, and dried. The washing with water in this step was repeated until the pH reached around 7. Then the same procedure as that of Example 15 was repeated to obtain the dye composition of the present invention.

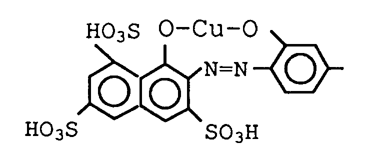

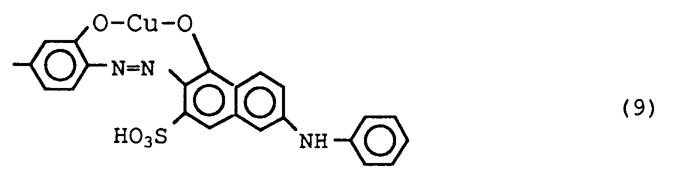

### Example 17

33 parts of a rayon filament cloth was put in 1,000 parts in total of a dye bath containing 0.5 part of the direct dye composition obtained in Example 15 and 10 parts of anhydrous sodium sulfate. The temperature was elevated to 90°C during 20 min and dyeing was conducted at that temperature for 40 min. After the cloth was slowly cooled to 60°C, it was thoroughly washed with water, and dried. The cloth thus dyed was free from streaky speck and very excellent in levelness. The same test was repeated except that the direct dye composition obtained in Example 16 was used to obtain similar results.

### Example 18

33 parts of a rayon filament cloth was put in 1,000 parts in total of a dye bath containing 0.1 part of each of the direct dye compositions obtained in Examples 15 and 16 (in total: 0.2 part) and 10 parts of anhydrous sodium sulfate. The temperature was elevated to 90°C during 20 min and dyeing was conducted at that temperature for 40 min. After the completion of the dyeing followed by slow cooling to 60°C, the cloth was washed with water and dried. The dyed cloth was excellent in levelness. As compared with the results obtained in the same manner as that described above except that combination dyeing was conducted with nonsequestered dyes of the formulae (8) and (9), it was found that the levelness of the cloth dyed with the dye composition of the present invention was far more excellent and the dye compositions obtained in Examples 15 and 16 in the present invention had an equal dyeing speed.

### Example 19

A rayon Bemberg cloth (mfd. by Asahi Chemical Industry Co., Ltd.) was padded with 1,000 parts of a padding solution, prepared by mixing 10 parts of each of the direct dye compositions obtained in Examples 15 and 16 (in total: 20 parts), 1 part of Snow Algin M (described above) and the balance of water, in such a manner that the cloth was thoroughly wetted. After intermediate drying followed by steaming at 100°C under atmospheric pressure for 5 min, the cloth was thoroughly washed with water and dried. The dyed cloth exhibited low tailing and good levelness.

The present invention provides an anionic dye composition comprising dyes having dyeing properties of exhaustion which are in excellent accord with each other and giving a dyed cloth which is remarkably improved in levelness and penetrability in dyeing natural and synthetic polyamide fibers, cellulose fibers and fibrous materials comprising them.

## Claims

1. An anionic dye composition comprising an anionic dye sequestered with a quaternary ammonium compound of the formula (1): 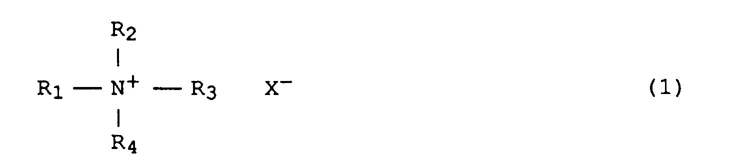 wherein R₁, R₂, R₃ and R₄ independently from each other represent an alkyl, benzyl, vinyl, hydroxyalkyl or aryloxyalkyl group (each alkyl having 1 to 18 carbon atoms) and X represents an anionic residue,
and having at least one sulfonic acid group per molecule, and an anionic surfactant.

2. An anionic dye composition according to claim 1, wherein the anionic dye is an acid dye.

3. An anionic dye composition according to claim 1 or 2, wherein the anionic dye is an acid dye selected from the group consisting of a monoazo dye, a diazo dye, an anthraquinone dye, an phthalocyanine dye, a rhodamine dye or a triphenylmethane dye, having 1 to 4 sulfonic acid groups.

4. An anionic dye composition according to claim 1, 2 or 3, wherein R₁, R₂, R₃ and R₄ of formula (1) is benzyl or alkyl having 8 to 16 carbon atoms and X⁻ is chloride bromide or hydrogensulfate anion.

5. An anionic dye composition according to claim 1, 2 or 3, wherein the quaternary ammonium compound of the formula (1) is decyltrimethylammonium chloride or lauryltrimethylammonium chloride.

6. An anionic dye composition according to claim 1, 2, 3, 4 or 5, wherein the anionic surfactant is selected from the group consisting of formalin condensates of naphthalenesulfonic acid and alkylbenzenesulfonic acid, ligninsulfonic acid, formalin condensates of cresolsulfonic acid, formalin condensates of cresol and 2-naphthol-6-sulfonic acid, formalin condensates of naphthalenesulfonic acid, formalin condensates of alkylnaphthalenesulfonic acid and formalin condensates of creosote oil sulfonic acids.

7. A process for dyeing natural and synthetic polyamide fibers, wool and fibrous materials containing them, characterized by using the dye composition set forth in Claim 1.

8. A process according to claim 7, wherein the wool is shrinkproof-finished wool cloth.
